# EUROPEAN PATENT APPLICATION

(11) **EP 1 736 714 A1**
(43) Date of publication of application: **27.12.2006**
(21) Application number: 05076463.8
(22) Date of filing: 24.06.2005
(51) Int. Cl.: F24F 11/00, G05D 23/19

(54) **Ventilation system with control means**

(71) Applicant: Nederlandse Organisatie voor toegepast-natuurwetenschappelijk Onderzoek TNO, 2628 VK Delft (NL)
(72) Inventor: Knoll, Bastiaan, 2671 DR Naaldwijk (NL)
(74) Representative: Winckels, Johannes Hubertus F.

(57) **Abstract**

A system for ventilating spaces via several ventilation ducts (1) including detection means for detecting air variables in those spaces or ventilation ducts, respectively. In those spaces, a measurement and control unit (3) can set or change, respectively, ventilation parameters by means of regulating valves (2) in the respective ventilation ducts. The detection means comprise per group of ventilation ducts one common sensor module (6) adapted for periodically, per ventilation duct or subgroup of ventilation ducts, measuring and transmitting one or more air variables to the control means. Through drive means (7), the sensor module can be periodically brought into contact with each ventilation duct belonging to said group or each subgroup of ventilation ducts, respectively. The ventilation ducts terminate in the detection space by means of exhaust openings (4) along which the drive means proper the sensor module. The collecting space (5) is connected to a common air discharge (8) having a common fan (9) therein. The control valves (2) can be set by a central actuator (12) which is propelled by the same drive means (7) as the sensor module and which is controlled from the measurement and control unit (3).

## Description

### Field of the invention

The invention relates to a system for ventilating spaces via several ventilation ducts, the system comprising detection means for detecting air variables in those spaces or ventilation ducts, respectively, and control means for setting or changing, respectively, ventilating parameters in these spaces or ventilation ducts, respectively.

### Background

The ventilation of houses is still primarily carried out via hand-controlled, natural supply openings (for instance grilles or windows) in the facades in combination with natural or mechanical exhaust. One alternative coming into use is balanced ventilation (mechanical supply and exhaust). It is only in the most recent system designs that natural supply openings are automatically controlled in order to respond to changes in ventilation needs and to correct for wind variations. Sometimes, the flow rate of the exhaust is automatically set thereto.

In order to determine varying ventilation needs per room, detection of air variables by, for instance, air quality sensors is hardly used yet. There are however some systems which set the ventilation via a pre-programmed use as is also often done with thermostats for heating houses. To determine the need for ventilation, at most one single central sensor is used in the exhausted air because sensors are expensive. As such a central sensor measures a mixed concentration of the entire house, although the average ventilation level can be set thereto, the proper distribution over the rooms cannot.

A further problem of the current ventilation systems, however well controlled, is that wind variations still cause considerable differences in ventilation per room. As a result thereof, rooms at the lee side are often underventilated while the total ventilation is much greater than the total need. In the underventilated rooms, insufficient air quality is involved which may lead to health damage and to discomfort, while the excessive total ventilation leads to excessive energy consumption.

As indicated, current systems cannot solve this problem or only with adverse effects. However, with need-dependent control per room, this could be possible to an important extent. Then, per room, a sensor would be required. However, the costs thereof form a crucial factor. Even if the sensor costs could be drastically reduced, there is still a problem that sufficient driving forces are not always present to provide for sufficient ventilation in rooms at the lee side. This can be remedied by increasing the power of a central exhaust fan, resulting, however, in additional energy consumption and possible overventilation (loss of heat, draught, noise) of the remaining rooms.

### Summary of the invention

The object of the ventilation system presented hereinafter is to meet the above-mentioned drawbacks while, among others, in each connected room, the desired air quality can be maintained with a minimum total flow through the ventilation system, which is, moreover, distributed such that each space is ventilated exactly according to need. As the new ventilation system is capable of awarding the maximum feasible total flow even to one space, a significantly greater variation in need can be met than with a conventional system.

To achieve all this, a system for ventilating spaces via several ventilation ducts is provided, the system comprising detection means for detecting air variables in these spaces or ventilation ducts, respectively, and control means for setting or changing, respectively, ventilation parameters in these spaces or ventilation ducts, respectively, the detecting means comprising however, per group of ventilation ducts, one common sensor module adapted for periodically, per ventilation duct or subgroup of ventilation ducts, measuring and transferring one or more air variables to the control means.

Preferably, the sensor module is connected to drive means which periodically bring the sensor module into contact with each ventilation duct belonging to the group or each subgroup of ventilation ducts belonging to the group, respectively. The ventilation ducts belonging to the group may for instance terminate in a detection space in which the sensor module is propelled by the drive means along the ventilation ducts terminating in this detection space and, in this manner, is periodically brought into contact with each ventilation duct belonging to the group or with each subgroup of ventilation ducts belonging to the group, respectively. Preferably, the ventilation ducts belonging to the group terminate in the detection space by means of exhaust openings circularly positioned therein, while the drive means propel the sensor module via a rotating movement along these circularly arranged exhaust openings. Non-circulating concepts, for instance linear ones, are also conceivable.

The detection space can be connected to a common air exhaust, which, in turn, can comprise a common fan. The earlier-mentioned control means can comprise through-flow regulating elements (for instance regulating valves) in the respective ventilation ducts and/or be connected to such regulating elements.

The through-flow control elements can be set each by its own actuator or by means of one actuator which is driven ― as is the sensor module
- by the drive means. The respective through-flow regulating elements can for instance be placed in or terminate in the detection space and the drive means can then periodically bring the actuator into contact with the through-flow regulating elements. In this manner, the same drive means can periodically bring the sensor module as well as the actuator into contact with the different ventilations ducts; the sensor module for sampling the ventilation air and the actuator for adjusting - if necessary - the respective regulating element under the control of the control means (in this case a measurement and control unit). The control means can determine, on the basis of, for instance, the air sampled during one cycle in a specific air duct, through analysis of this air sample, that the humidity in the respective space is too high and that the ventilation should therefore be increased. Thereupon, the control means can ensure that the actuator, which has been brought into contact with the through-flow regulating element of the respective ventilation duct, sets this regulating element such that the through-flow increases.

The ventilation system presented here is further set forth hereinbelow with reference to an exemplary embodiment.

### Exemplary embodiment

Fig. 1 shows a first exemplary embodiment of the ventilation system presented hereinabove;

Fig. 2 shows a second exemplary embodiment of the ventilation system presented hereinabove.

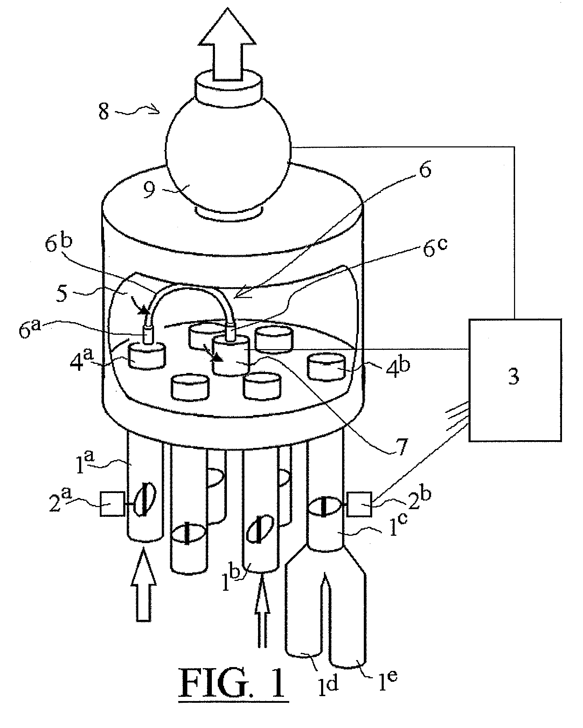

The system shown in Fig. 1 for ventilating spaces (not shown) comprises a group of several ventilation ducts 1(a, b, c,...) connected to those spaces, in which remote controlled regulating valves 2(a, b) are included. By means of these valves 2, a measurement and control unit 3 can individually set and, if necessary, change the through-flow of the air flowing through the ventilation ducts 1. It is noted that some ducts, such as the ducts 1d and 1e may be combined into a subgroup, whose ducts 1 (d, e), on an extremity not shown, can terminate at two different locations in the same (for instance somewhat larger) space to be ventilated. In such a case, the air through-flow in all ventilation ducts belonging to this subgroup can be regulated by a common regulating valve, viz. valve 2b.

The ventilation ducts 1 terminate (4a, 4b) in a more or less drum-shaped collecting space 5, in which a sensor module 6 ― comprising a nozzle 6a, a sampling duct 6b and a sensor unit 6c (which may comprise one or more different sensor elements, for, for instance humidity, temperature, CO₂, smoke etc.) - is propelled by a drive motor 7 along circularly arranged exhausts 4 (a, b, ...) of the ventilation ducts. Thus, the sensor module 6 is alternately brought into contact with each ventilation duct 1(a, b, c, ....) belonging to the group or with each subgroup of ventilation ducts 1(d, e,) belonging to the group, respectively, and can periodically sample the air flowing therefrom.

In this manner, for the entire group of ventilation ducts and spaces connected thereto, one sensor module 6 can measure one or more air variables, for instance the humidity, temperature, the CO₂ content etc. By transmitting the thus measured values to the measurement and control unit 3, this measurement and control unit 3 is enabled, by means of setting the regulating valves 2 in the ventilation ducts 1, to set the ventilation parameters for the different spaces such that everywhere, the climate remains as desired.

The collecting space 5 is connected to a common air exhaust 8 comprising a common fan 9 which, in this exemplary embodiment, can also be controlled (rotational speed, power, passage) by the measurement and control unit 3.

In this manner, the system proposed hereinabove can provide for an optimal ventilation in (temporarily) humid spaces (bathroom, toilet, kitchen) as well as in residential rooms (living room and bedrooms) of, for instance, a house. The air flows from the ventilation ducts connected to the different spaces are collected in the "collecting" drum 5, to which the central exhaust fan 9 is connected. The ventilation ducts 1 are connected to the exhausts 4 in the bottom of the collecting drum 5, at equal distances from the center. About this same central axis, the sampling duct 6b rotates in a constant manner, driven at a steady pace by the drive motor 7. Thus, above each exhaust 4 the air quality is successively measured. This is for instance done with the aid of a standard CO₂, humidity or "mixed-gas" sensor in sensor unit 6c. When the concentration in the respective ventilation duct 4 is higher than the desired value, the valve 2 in the ventilation duct 4 is opened further, under the control of the measurement and control unit 3. If the respective valve is already completely open, the measurement and control unit 3 can decide to have the central exhaust fan 9 speed up. This can also be the case when the mixed concentration in the collecting drum 5, as it is measured between two exhausts 4, is too high. If the concentration in an exhaust is lower than a desired value, the respective valve 2 is shut further. In this manner, it is ensured that at each moment, each room obtains the ventilation desired in that room.. However, what is prevented in this manner is that at any given time, the total ventilation is higher than absolutely necessary. Even when a room is not used and the valve 2 in the respective ventilation duct 4 is therefore (virtually) closed, the system remains functional because then, the small leakage flow existent under the influence of the reduced pressure of the exhaust fan 9 is sufficient for sampling by the sensor module 6.

The exhaust fan 9, collecting drum 5 with sampling section (detection module 6) and connecting ducts (the last portion of the air ducts 4 in which the valves have been provided) can be manufactured as one integrated product, which can be offered on the market together with the measurement and control unit 3.

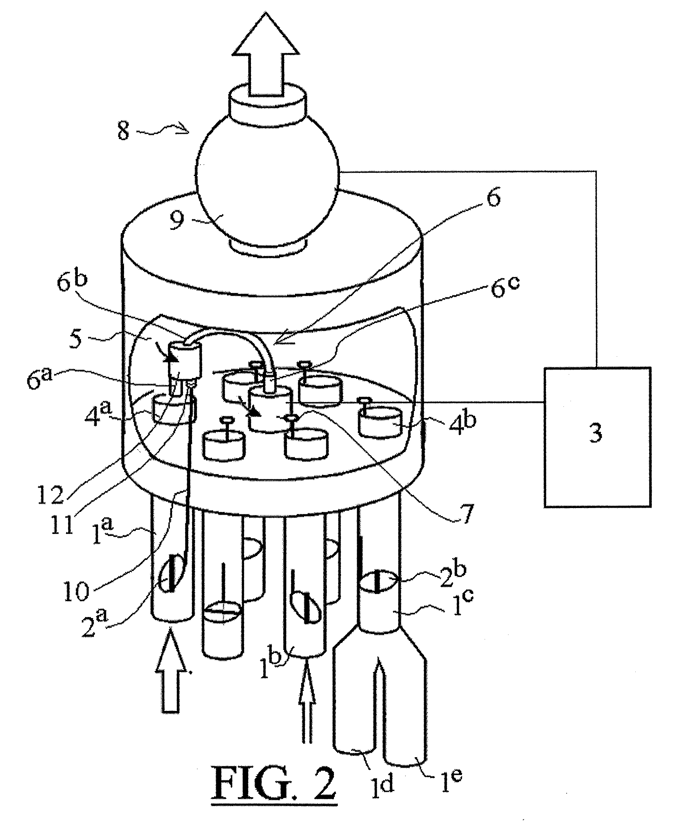

Fig. 2 shows, by and large, the same system as Fig. 1, however, in this embodiment, the valves 2 can be set by means of a common actuator 12 which is moved by the same drive motor 7 as is used for driving the sensor module 6a. The valves 2 can be set from the collecting space 5 by means of valve rods 10. Propelled by the drive motor 7, the actuator can be periodically brought into contact with each of these valves by means of, for instance, a mechanical or magnetic coupling 11. It can be proposed that this coupling comprises a small sticky plate on the extremity of the valve rod 10 and a switchable electromagnet on the extremity of a (telescopic) adjusting axis on the side of the actuator 12. When the drive motor 7 is, for instance, a stepping motor, it can be momentarily halted when the sensor module 6a and the actuator 12 have arrived at a ventilation duct. Then, the electromagnet can be energized by the control unit 3, as a result of which the adjusting axis is temporarily coupled to the valve rod. Thereupon, by moving the adjusting axis of the actuator, via the valve rod 10, the control unit 3 can set the respective valve 2 in the correct position. When the air quality requires no change, the valve can be left in the same position. In that case, the actuator 12 needs not be coupled to the respective valve rod 10 and the rotation needs not be interrupted (taking as a starting point that during passage of the sensor module, an adequate sample can be taken from the ventilation air).

Therefore, in this manner, the drive motor can periodically bring both the sensor module 6a and the actuator 12 in the vicinity of the different ventilation ducts: the sensor module for sampling the ventilation air and the actuator (only if necessary) for adjusting the respective regulating valve under the control of the measurement and control unit 3.

It is noted that, if desired, more than one common sensor module 6a and/or common actuator 12 can be provided. Not, as shown in Figs. 1 and 2, designed singly, with one "arm" 6a, but, for instance, designed doubly, with two arms extending opposite each other. Threefold or fourfold design is also possible.

In summary, the advantages of this system are:
- No high costs for sensors, because all (or a group of) rooms can be separately sampled with one sensor;
- No additional costs for measuring ducts, as the discharge ducts 1 with their exhausts 4 function as such via the scanning sensor module 6;
- No high costs for valve motors, because with one actuator 12 and coupling 11, all valves 1 can be separately set via the valve rods 10;
- The possibility to construct the collecting drum 5, the fan 9, the valves 2 and the measurement and control unit 3 to form a compact unit and to install it as one whole;
- Always sufficient ventilation in each room, therefore an optimal air quality, also in situations in which, normally, insufficient driving forces would be involved;
- Increase of the adjustment range of the ventilation, as the available capacity is not (as is customary) proportionally distributed over all connected rooms, but is exclusively allotted to the rooms where there is a need;
- Minimum energy consumption for ventilation by optimal, need-dependent control which provides for selective influence of pressure by the exhaust fan 9 only in the rooms where this is necessary to a degree which is exactly sufficient;
- Better build-in possibilities due to the limited size of the duct passages for the ventilation ducts (notably of importance when renovating);
- All essential functionality incorporated in one complete product.

## Claims

1. A system for ventilating spaces via several ventilation ducts (1), the system comprising detection means for detecting air variables in those spaces or ventilation ducts, respectively, and control means (2, 3) for setting or changing, respectively, in those spaces or ventilation ducts, respectively, ventilation parameters, wherein per group of ventilation ducts said detection means comprise one common sensor module (6), adapted for periodically, per ventilation duct or subgroup of ventilation ducts, measuring and transmitting one or more air variables to the control means.

2. A system according to claim 1, wherein the sensor module is connected to drive means (7) which periodically bring the sensor module into contact with each ventilation duct belonging to said group or with each subgroup of ventilation ducts belonging to said group.

3. A system according to claim 2, wherein the ventilation ducts belonging to said group terminate in a collecting space (5) in which the sensor module is propelled by the drive means along the ventilation ducts terminating in this collecting space and is thus, periodically, brought into contact with each ventilation duct belonging to said group or with each subgroup of ventilation ducts belonging to said group.

4. A system according to claim 3, wherein the ventilation ducts belonging to said group terminate in the detection space by means of exhaust openings (4) circularly positioned therein while the drive means propels the sensor module along these circularly arranged exhaust openings by means of a rotating movement.

5. A system according to claim 3, wherein the collecting space is connected to a common air exhaust (8).

6. A system according to claim 5, wherein the common air exhaust comprises a common fan (9).

7. A system according to claim 1, wherein the control means comprise through-flow regulating elements (2) in the respective ventilation ducts, which can be set from a measurement and control unit (3).

8. A system according to claims 2 and 7, comprising means (10, 11) which are suitable for having a common actuator (12) set the through-flow control elements (2), which actuator is propelled by said drive means (7).

9. A system according to claim 8, wherein the actuator is controlled from the measurement and control unit (3).
